(19) Europäisches Patentamt
European Patent Office
Office européen des brevets

(11) **EP 1 341 839 B2**

(12) **NEW EUROPEAN PATENT SPECIFICATION**
After opposition procedure

(45) Date of publication and mention of the opposition decision:
**19.10.2011 Bulletin 2011/42**

(45) Mention of the grant of the patent:
**26.12.2007 Bulletin 2007/52**

(21) Application number: **01995966.7**

(22) Date of filing: **29.11.2001**

(51) Int Cl.:
*C08J 5/18* (2006.01)    *C08K 3/00* (2006.01)

(86) International application number:
**PCT/US2001/044630**

(87) International publication number:
**WO 2002/046277 (13.06.2002 Gazette 2002/24)**

(54) **BIODEGRADABLE BREATHABLE FILM AND LAMINATE**

BIOLOGISCH ABBAUBARE ATMUNGSAKTIVE FOLIE UND BIOLOGISCH ABBAUBARES ATMUNGSAKTIVES LAMINAT

FILM BIODEGRADABLE RESPIRANT ET LAMINE

(84) Designated Contracting States:
**DE FR GB IT**

(30) Priority: **07.12.2000 US 251993 P**
**09.11.2001 US 36106**

(43) Date of publication of application:
**10.09.2003 Bulletin 2003/37**

(73) Proprietor: **KIMBERLY-CLARK WORLDWIDE, INC.**
**Neenah, WI 54956 (US)**

(72) Inventors:
• **SCHIFFER, Daniel, K.**
**Marietta, GA 30062 (US)**
• **STOPPER, Steven, R.**
**Duluth, GA 30097 (US)**

(74) Representative: **Davies, Christopher Robert et al**
**Dehns**
**St Bride's House**
**10 Salisbury Square**
**London**
**EC4Y 8JD (GB)**

(56) References cited:
| | |
|---|---|
| **EP-A- 0 776 927** | **EP-A- 1 008 629** |
| **EP-A1- 0 022 439** | **JP-A- 9 291 163** |
| **JP-A- 9 291 164** | **JP-A- 9 291 165** |
| **US-A- 5 171 308** | **US-A- 5 464 689** |
| **US-A- 5 945 210** | **US-A- 6 028 160** |

Remarks:
The file contains technical information submitted after the application was filed and not included in this specification

**EP 1 341 839 B2**

**Description**

FIELD OF THE INVENTION

This invention is directed to a biodegradable breathable film which transmits water vapor and is substantially Impermeable to liquid water. The invention is also directed to a breathable laminate including the biodegradable film and a nonwoven web.

BACKGROUND OF THE INVENTION

Breathable, stretch-thinned films and nonwoven fabric laminates containing them are known in the art. The films are typically prepared by mixing a polyolefin, for example polyethylene or polyproplene, with a particulate inorganic filter, for example calcium carbonate. The mixture is cast or blown into a film. The film may have a single flller-containing layer, or may be coextruded with one or two outer skin layers for improved processing and later bonding to a substrate.

The films are rendered breathable to water vapor by stretching them uniaxially or biaxially, to 1.5 · 7.0 times their original dimension in one or both directions, at an elevated temperature which is below the melting point of the polyolefin. The stretching causes localized separation between the polyolefin and individual filler particles, resulting in void formation around filler particles. The voids are bounded by thin membranes, which may be continuous or broken between adjacent voids. The network of voids and thin polymer membranes creates a tortuous path through the film, through which vapor may diffuse. However, the film remains substantially impermeable to liquid water.

The breathable, stretch-thinned films are commonly laminated on one or both sides to a nonwoven web, such as a spunbond web, to make a breathable barrier laminate. A polypropylene spunbond web, for instance, can serve as an effective load bearing constituent in a wide variety of personal care absorbent articles and medical apparel for which the breathable barrier laminates are employed. The personal care absorbent garments and medical apparel are typically disposable, meaning that they are intended for disposal after one or few uses. Many of these disposable articles end up in landfills, where the polyolefin components are fairly stable and do not reality disintegrate.

EP 1008 629A1 discloses a biodegradable polyester resin composition as a stretch-thinned fllm, a film laminate including biodegradable film layers and a biodegradable tape. The composition may include filler particles. In particu*lar, inorganic filler particles as talc particles.

EP 0 776 927 A1 discloses a stretched film of a lactic acid-based polymer including filler particles that is suited for the material of a pre-paid card.

US 6 028 160 discloses a stretch-thinned film comprising a biodegradable polymer and a filler that is suitable for projection of a substrate against corrosion caused by water vapor.

There is a need or desire for disposable personal care absorbent garment and medical apparel whose primary structural components are biodegradable. Accordingly, there is also a need or desire for a breathable barrier film, and a film/nonwoven laminate, formed using one or more biodegradable polymers.

SUMMARY OF THE INVENTION

The present invention is directed to a breathable, stretch-thinned microporous barrier film including a biodegradable polymer matrix and filler particles dispersed within the matrix. The term 'biodegradable' refers to materials which can be readily decomposed by biological means, especially by environmental heat, moisture and/or bacterial action. A suitable test for determining whether or not a plastic material is biodegradable is ASTM D6340-9B, entitled "Standard Test Methods For Determining Aerobic Biodegradation of Rediolabeted Plastic Materials in An Aqueous Or Compost Environment". This test procedure is incorporated by reference. The test procedure relied upon is Method B, which measures cumulative percent oxidation of the plastic material in a controlled compost environment

In accordance with the invention, a biodegradable thermoplastic polymer comprising a terpolymer of butanediol, therephthalic acid, and adipic acid is mixed with filler particles to form a composition which is made into a film according to claim 1 by cast film extrusion, blown film extrusion, or similar techniques. The film is stretch-thinned, desirably at an elevated temperature below the melting point of the matrix polymer, to form voids around the particles. The voids are bound by thin polymer membranes, which may be continuous or broken between adjacent voids, The network of voids and thin polymer membranes creates a tortuous path through the film, permitting the diffusion of water vapor white substantially blocking penetration by aqueous liquids. The film may have one or more layers. Any additional layers may contain polymer only, or a mixture of polymer and filler.

The present invention is also directed to a breathable laminate according to claim 14 including the breathable microporous film and at least one fibrous nonwoven web. The fibrous nonwoven web is formed from a thermoplastic polymer, desirably a biodegradable thermoplastic polymer. The breathable film and/or laminate may be used in a wide variety of disposable personal care absorbent articles and medical apparel. For instance, the breathable barrier film and/or laminate may be used as an outer cover (backsheet) in diapers, training pants, absorbent swim wear, absorbant underpants, adult incontinence products and feminine hygiene products, and may also be used in baby wipes. The breathable barrier film and/or laminate may also be used in medical garments, aprons, underpads, bandages, drapes and wipes. Following disposal in a landfill, the breathable film and/or laminate degrades over a relatively short period of time.

With the foregoing in mind, it is a feature and advantage of the invention to provide a breathable, stretch-thinned barrier film whose structural component (the polymer matrix) is biodegradable.

It is also a feature and advantage of the invention to provide a laminate of the biodegradable film to a fibrous nonwoven web, as well as a laminate whose fibrous nonwoven web is biodegradable.

It is also a feature and advantage of the invention to provide personal care absorbent garments and medical apparel which incorporate the films and laminates of the invention and exhibit improved biodegradablilty.

BRIEF DESCRIPTION OF THE DRAWINGS

FIG. 1 is a sectional view of a single-layer stretch-thinned breathable film of the invention.
FIG. 2 is a sectional view of a multilayer breathable film of the invention.
FIG. 3 schematically illustrates a process for laminating a breathable film of the invention to a nonwoven web.
FIG. 4 illustrates a laminate including the breathable film of the invention.

DEFINITIONS

The term "film" refers to a thermoplastic film made using a film extrusion process, such as a cast film or blown film extrusion process.

The term "biodegradable film" refers to a film whose primary structural component (the matrix polymer) is biodegradable. Whether or not a polymer is biodegradable can be determined from ASTM Procedure D6340-98, as discussed above.

The term "breathable barrier film" refers to a film which is substantially impermeable to liquid water and has a water vapor transmission rate ("WVTR") of at least about 500 grams/$m^2$-24 hours using the Mocon procedure described below.

The term "polymer" includes, but is not limited to, homopolymers, copolymers, such as for example, block, graft, random and alternating copolymers; terpolymers, etc., and blends and modifications thereof. Furthermore, unless otherwise specifically limited, the term "polymer" shall include all possible geometrical configurations of the material. These configurations include, but are not limited to isotactic, syndiotactic and atactic symmetries.

The term "biodegradable polymer" refers to a polymer which can be readily decomposed by biological means, such as a bacterial action, environmental heat and/or moisture. Especially suitable are polymers which decompose naturally through the action of bacteria present in the environment or in the ground, as in a landfill. When tested according to ASTM D6340-98, discussed above, a biodegradable polymer is one which is at least 80% dissolved and/or decomposed (oxidized) after 180 days in a controlled compost environment as set forth in the procedure.

The term "nonwoven fabric or web" means a web having a structure of individual fibers or threads which are interlaid, but not in a regular or identifiable manner as in a knitted fabric. Nonwoven fabrics or webs have been formed from many processes such as, for example, meltblowing processes, spunbonding processes, air laying processes, and bonded carded web processes. The basis weight of nonwoven fabrics is usually expressed in ounces of material per square yard (osy) or grams per square meter (gsm) and the fiber diameters are usually expressed in microns. (Note that to convert from osy to gsm, multiply osy by 33.91.)

The term "microfibers" means small diameter fibers having an average diameter not greater than about 75 microns, for example, having an average diameter of from about 1 micron to about 50 microns, or more particularly, microfibers may have an average diameter of from about 1 micron to about 30 microns. Another frequently used expression of fiber diameter is denier, which is defined as grams per 9000 meters of a fiber. For a fiber having circular cross-section, denier may be calculated as fiber diameter in microns squared, multiplied by the density in grams/cc, multiplied by 0.00707. A lower denier indicates a finer fiber and a higher denier indicates a thicker or heavier fiber. For example, the diameter of a polypropylene fiber given as 15 microns may be converted to denier by squaring, multiplying the result by .89 g/cc and multiplying by .00707. Thus, a 15 micron polypropylene fiber has a denier of about 1.42 ($15^2$ x 0.89 x .00707 = 1.415). Outside the United States the unit of measurement is more commonly the "tex," which is defined as the grams per kilometer of fiber. Tex may be calculated as denier/9.

The term "spunbonded fibers" refers to small diameter fibers which are formed by extruding molten thermoplastic material as filaments from a plurality of fine capillaries of a spinnerette having a circular or other configuration, with the diameter of the extruded filaments then being rapidly reduced as by, for example, in U.S. Patent 4,340,563 to Appel et al. U.S. Patent 3,692,618 to Dorschner et al., U.S. Patent 3.802.817 to Matsuki et al. U.S. Patents 3.339,992 and 3.341.394 to Kinney, U.S. Patent 3,502,763 to Hartman. U.S. Patent 3,502,638 to Petersen, and U.S. Patent 3,542,615 to Dobo et al., each of which is incorporated herein in its entirety by reference. Spunbond fibers are quenched and generally not tacky when they are deposited onto a collecting surface. Spunbond fibers are generally continuous and often have average diameters larger than 7 microns, more particularly, between about 10 and 30 microns.

The term "meltblown fibers" means fibers formed by extruding a moltenthermoplastic material through a plurality ugh 8 p/utaJity of flne, usually circular, die capillaries as molten threads or filaments into converging high velocity heated gas (e.g., air) streams which attenuate the filaments of molten thermoplastic material to reduce their diameter, which may be to microfiber diameter. Thereafter, the meltblown fibers are carried by the high velocity gas stream and are deposited on a collecting surface to form a web of randomly dispersed meltblown fibers. Such a process is disclosed for example, in U.S. Patent 3.648.241 to Butin et al. Meltblown fibers are microfibers which may be continuous or discontinuous, are generally smaller than 10 microns in diameter, and are generally self bonding when deposited onto a collecting surface. Meltblown fibers used in the invention are preferably substantially continuous in length.

DETAILED DESCRIPTION OF THE PRESENTLY PREFERRED EMBODIMENTS

Referring to Fg.1, a breathable monolayer film 10 is shown including a matrix 12, a plurality of voids 14 within the matrix surrounded by relatively thin microporous membranes 13 defining tortuous paths, and one or more filler particles 16 in each void 14. The film 10 is microporous as well as breathable, and the microporous membranes 13 between the voids readily permit molecular diffusion of water vapor from a first surface 18 to a second surface 20 of the film 10.

The matrix 12 can include any film-forming biodegradable polymer that is a terpolymer of terephtalic acid, adipic acid and 1,4-butanediol such as the polymer sold by BASF Corporation under the name ECOFLEX®, or a similar polymer sold by Eastman Chemical Co. under the name EASTAR®.

The matrix polymer may constitute about 20-95% by weight at the breathable monolayer film 10 (or,in the case of multilayer films described below that percent of the filled film layer). When the film (after stretching, as described below) is desired to have excellent strength and moderate breathability, the matrix polymer may constitute about 55-95% by weight of the breathable film or film layer, suitably about 60-80% by weight of the breathable film or film layer. In this embodiment, the filler particles 16 may constitute about 5-45% of the breathable film or film layer, suitably about 20-40% by weight When the film (after stretching) is desired to have superior breathability end mode rate strength, the breathable film or film layer may include about 20% to less than 55% by weight of the matrix polymer, suitably about 35-50% by weigh and more than 45% to about 80% by weight of the particulate filter, in the present invention about 50-65% by weight is chosen.

The filler particles 16 may be inorganic filter particles. Suitable inorganic fillers include without limitation calcium carbonate, days, silica, alumina, barium sulfate, sodium carbonate, talc, magnesium sulfate, titanium dioxide, zeolites, aluminum sulfate, diatomaceous earth, magnesium sulfate, magnesium carbonate, barium carbonate, kaolin, mica. Carbon, calcium oxide, magnesium oxide, aluminum hydroxide and combinations of these particles. The mean diameter for the filler particles 16 should range from about 0.1-10 microns, preferably about 0.6-7.0 microns, most preferably about 0.8-20 microns.

The filler particles 16 may also be organic filler particles. Examples of organic filler particles that may be used include particles made of polystyrene, polyamides, polyvinyl alcohol, polyethylene oxide, polyethylene terephthalate, polybutylene terephthalate, polycarbonate, polytetrafluoroethylene, and other suitable polymers and derivatives thereof.

The filler particles 16 may be water-swellable filler particles. By "water-swellable" it is meant that the particles must be capable of absorbing at least about 10 times their weight, preferably at least about 20 times their weight, most preferably at least about 30 times their weight, in distilled water. Examples of organic water-swallable fillers include without limitation natural and synthetic superabsorbent materials. Natural superabsorbent materials include guar gum, agar, pectin and the like. Synthetic superabsorbent materials include hydrogel polymers such as alkali metal salts of polyacrylic acids, polyacrylamides, Polyvinyl alcohol, ethylene-maleic anhydride copolymers, polyvinyl ethers, methyl cellulose, carboxymethyl cellulose, hydroxypropylcellulose, polyvinylmorpholinone, and polymers and copolymers of vinyl sulfonic acid, polyecrylates, polyacrylamides, polyvinylpyrridine, and the like. Other suitable polymers include hydrolyzed acrylonitrile grafted search, acrylic acid grafted starch, and isobutylene maleic anhydride polymers and mixtures thereof. The hydrogel polymers are preferably lightly crosslinked to render the materials substantially water insoluble. Crosslinking may, for exemple, be accomplished by irradiation or by covalent, Ionic, van der Waals, or hydrogen bonding.

The filler particles 1B may desirably be biodegradable filler particles. Suitable biodegradable filler particles include cyclodextrin. The term "cyclodextrin" includes cyclodextrin compounds and their derivatives which retain the cyclodextrin ring-like structure in all or part of their molecular configuration.

Cyclodextrins may contain from six to twelve glucose units arranged in a ring. Cyclodextrins include, for instance, alpha-cyclodextrin compounds (6 glucose units arranged in a ring), beta-cyclodextrin compounds (7 glucose units arranged in a ring) and gamma-cyclodextrin compounds (8 glucose units arranged in a ring). The coupling and configuration of the glucose units causes the cyclodextrins to have a conical molecular structure with a hollow interior lined by hydrogen atoms and glycoside bridging oxygen atoms.

Suitable cyclodextrin compounds should be in a chemical form which permits them to exist as solid particles having a melting point higher than the desired stretching temperature for the thermoplastic polymer employed in the film, yet lower than the film extrusion temperature. This way, the film can be extruded with the polymer and filler in a molten state, and later stretched somewhat below the melting point of the polymer, without melting the cyclodextrin particles. By melting the filler during extrusion, processing problems such as die lip build-up are alleviated. Yet to perform its void-initiating function during film stretching, the filler must re-crystallize and remain in a solid particulate state during film stretching. Particles which dissolve in the polymer matrix, or break down and disperse to the point of becoming too small, they may not be effective in causing void formation during stretching of the film 10. In various embodiments, the filler particles 16 may include a mixture of different filler particles (e.g., made from different materials).

The film may be uniaxially or biaxially stretched. The film may be uniaxially stretched to about 1.1-7.0 times its original length, preferably to about 1.5-6.0 times its original length, most preferably to about 2.5-5.0 times its original length. The film may alternatively be biaxially stretched by the same ratios, using conventional techniques familiar to persons skilled in the art. The stretching should occur below the melting temperature of the polymer matrix, suitably about 15-50°F below the melting point of the polymer matrix.

The breathable, stretch-thinned film 10 should have a thickness which facilitates breathability to water vapor, and which also provides structural integrity and liquid barrier. After stretching, the film 10 should have a thickness of about 5-50 microns, preferably about 8-30 microns, most preferably about 10-20 microns. Prior to the orientation, the film 10 can be prepared using cast or blown film extrusion, or another suitable film-forming technique.

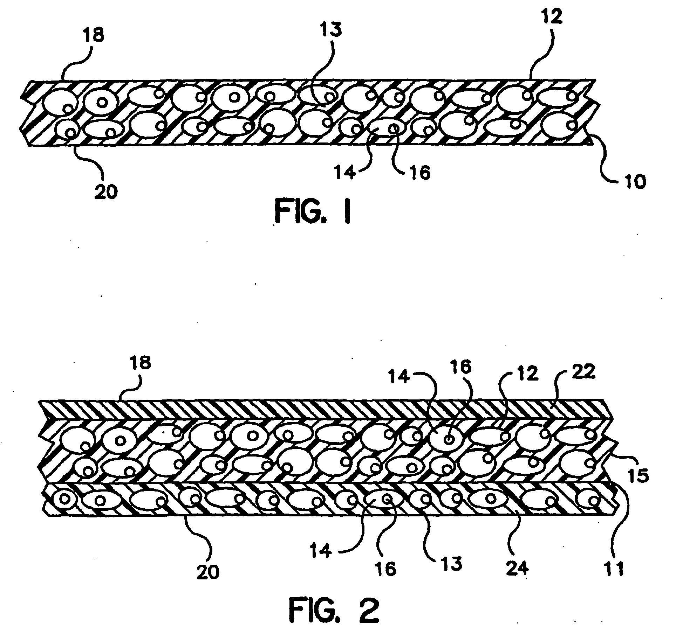

Fig. 2 illustrates another embodiment in which a multilayer stretch-thinned breathable film 11 includes a primary breathable core layer 15 coextruded between two outer skin layers 22 and 24. The core layer 15 includes a biodegradable polymer matrix 12, and filler particles 16 surrounded by voids 14. The first outer skin layer 22 includes only a thermoplastic polymer, and is free of filler particles and voids. The second outer skin layer 24 includes a polymer matrix 13, and filler particles 16 surrounded by voids 14 within the matrix 13.

The multilayer film 11 in Fig. 2 illustrates that the outer skin layers 22 and 24 may or may not contain a filler. The core layer 15 mayhave the same or a similar-polymer-composition to the monolayer film 10 described with respect to Fig. 1. The outer layers 22 and 24 may contain a softer, lower melting polymer or polymer blend which renders the outer layers more suitable as heat seal bonding layers for thermally bonding the film to a nonwoven web. When the outer layer (e.g., 22) is free of filler, one objective is to alleviate the build-up of filler at the extrusion die lip which may otherwise result from extrusion of a filled monolayer film. When the outer layer (e.g., 24) contains filler particles and voids, one objective is to provide a suitable bonding layer without adversely affecting the overall breathability of the film 11.

The thickness and composition of the outer layers 22 and 24 should be selected so as not to substantially impair the moisture transmission through the breathable core layer 15. This way, the breathable core layer 15 may determine the breathability of the entire film, and the outer layers will not substantially reduce or block the breathability of the film. To this end, the skin layers 22 and 24 should be less than about 10 microns thick, suitably less than about 5 microns thick, desirably less than about 2.5 microns thick. Suitable skin layer polymers include without limitation biodegradable polymers, such as polylactic acid polymers (especially homopolymers); polyesters of butanediol, adipic acid, succinic acid and/or terephthalic acid; polycaprolactone polymers, and combinations thereof. An especially suitable polymer is a terephthalic acid, adipic acid and 1,4-butanediol, sold by BASF Corporation under the name ECOFLEX®, or by Eastman Chemical Co. under the name EASTAR®.

Regardless of whether the breathable stretch-thinned film is a monolayer film or a multilayer film, the overall film should be constructed to function as a breathable microporous film. To function properly, the overall film should have a water vapor transmission rate (WVTR) of at least about 500 grams/$m^2$-24 hours measured using the Mocon procedure described below. Suitably, the overall film should have an WVTR of at least about 1000 grams/$m^2$-24 hours, more suitably at least 2000 grams²/m -24 hours, desirably at least 5000 grams/$m^2$-24 hours.

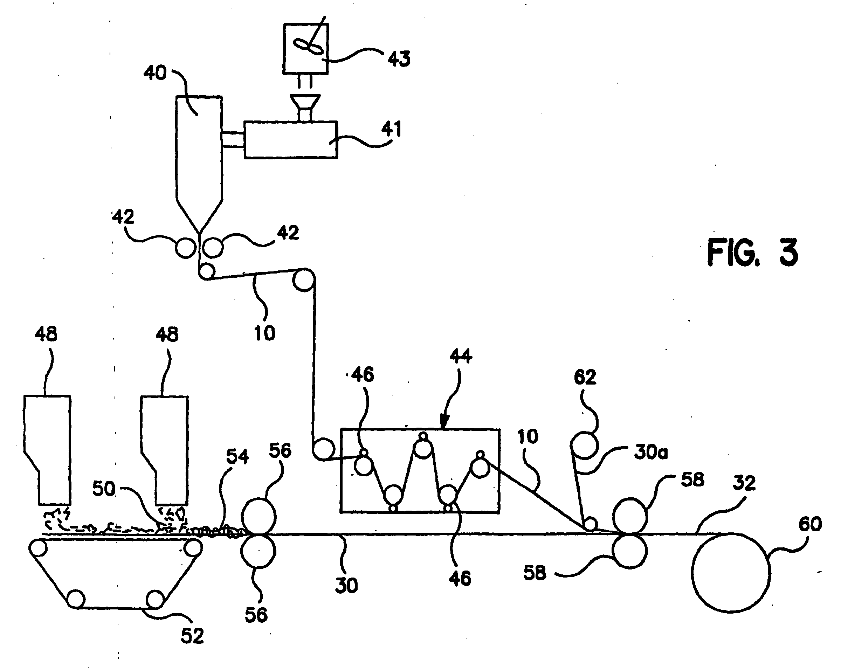

Fig. 3 illustrates an integrated process for forming a breathable microporous film and a film/nonwoven laminate containing it. Referring to Fig. 3, film 10 is formed from a film extrusion apparatus 40 such as a cast or blown unit which could be in-line or off-line. Typically the apparatus 40 will include an extruder 41. Filled resin, including the biodegradable polymer matrix material, and particulate filler, is prepared in a mixer 43 and directed to extruder 41. The film 10 is extruded into a pair of nip or chill rollers 42, one of which may be patterned so as to impart an embossed pattern to the newly formed film 10.

From the film extrusion apparatus 40 or off-line rolls supplied, the filled film 10 is directed to a film stretching unit 44 which can be a machine direction orienter, commercially available from vendors including the Marshall and Williams Co. of Providence, Rhode Island. Apparatus 44 has a plurality of pairs of stretching rollers 46, with each subsequent pair moving at progressively faster speed than the preceding pair. The rollers 46 apply an amount of stress and progressively stretch the filled film 10 to a stretched length where the film 10 becomes microporous and breathable. As shown, the film 10 is stretched only in the machine direction, which is the direction of travel of the film 10 through the process in Fig. 3.

Advantageously, the film 10 may be uniaxially stretched to about three times its original length, using an elevated stretch temperature of about 150-200°F for most polyolefin-based films. The elevated stretch temperature can be sustained by heating some of the stretch rollers 46. The optimum stretch temperature varies with the type of matrix polymer in the film 10, and is always below the melting temperature of the matrix polymer. The film 10 may also be biaxially stretched, with the cross-directional stretching occurring before, after or concurrently with the machine direction stretching.

Still referring to Fig. 3, the film 10 may be laminated to nonwoven web 30 immediately after the film is stretched and immediately following manufacture of the nonwoven web. The nonwoven web 30 can be a spunbonded web, a meltblown web, a bonded carded web, or combination thereof. The web can be formed by dispensing polymer filaments 50 from a pair of conventional spinnerettes 48, onto a conveyor assembly 52. The filaments 50 are deposited onto the conveyor to form mat 54. The filaments 50 of mat 54 are then compressed to form inter-filament bonding using a pair of nip rollers 56, resulting in the spunbonded web 30. The spunbonded web 30 is then transported to the calender bonding rollers 58 and is thermally bonded to one side of the film 10. The film 10 in Fig. 3 is simultaneously bonded on its other side to a second material 30a originating from a supply roll 62. The second material 30a may be a second nonwoven web, or another film layer The resulting laminate 32 is wound and stored onto a supply roll 60.

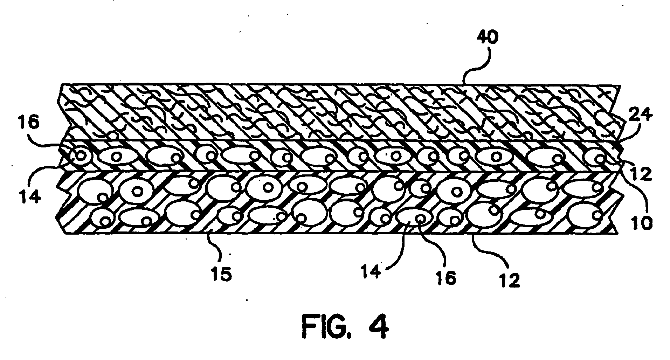

The breathable film may be laminated to one or more fibrous nonwoven substrates, such as a spunbond web, meltblown web, or airlaid web, using conventional adhesive bonding or thermal bonding techniques known in the art. The type of substrate and bonding will vary depending on the particular end use application. An example of a laminate is shown in Fig. 4, wherein a nonwoven web 40 is laminated to a two-layer breathable film of the invention. In the embodiment shown, the web 40, which can be a spunbonded web made from a biodegradable polymer, is bonded to a voided skin layer 24 of the multilayer film 10, which layer may contain particulate filler particles. The primary filler-containing layer 15 faces away from the nonwoven web 40. The lamination of the film to the nonwoven web may be accomplished using conventional thermal bonding or adhesive bonding techniques. The fibrous nonwoven web may be made from any of the biodegradable polymers listed above for the breathable film. Alternatively, the spunbond web may be made from a suitable polyolefin (e.g., polyethylene or polypropylene), or another thermoplastic polymer.

The breathable stretch-thinned biodegradable film and/or laminate containing it may be used in a wide variety of personal care articles and medical articles. The term "personal care articles" includes without limitation diapers, training pants, swim wear, absorbent underpants, baby wipes, adult incontinence products and feminine hygiene products. The term "medical articles" includes without limitation medical garments, aprons, underpads, bandages, drapes and wipes.

Personal care articles generally include a liquid permeable topsheet, which faces the wearer, and a liquid-impermeable bottom sheet or outer cover. Disposed between the topsheet and outer cover is an absorbent core, and often the topsheet and outer cover are sealed to encase the absorbent core. Personal care articles may be of various shapes such as, for example, an overall rectangular shape, T-shape or an hourglass shape. The baffle or outer cover may include a breathable liquid-impervious film and/or a laminate thereof such as described herein. The topsheet is generally coextensive with the outer cover but may optionally cover an area that is larger or smaller than the area of the outer cover, as desired. By way of example only, exemplary personal care articles and components thereof are described in U.S. Patent No. 4,798,603 to Meyer et al., U.S. Patent No. 4,753,649 to Pazdernick, U.S. Patent No. 4,704,116 to Enloe, U.S. Patent 5,429,629 to Latimer et al.; the entire contents of each of the aforesaid references are incorporated herein by reference.

The topsheet preferably presents a body-facing surface that is compliant, soft to the touch, and non-irritating to the wearer's skin. The topsheet is suitably employed to help isolate the wearer's skin from liquids held in the absorbent core. In order to present a drier surface to the wearer, the topsheet may be less hydrophilic than the absorbent core and also sufficiently porous to be readily liquid permeable. Topsheets are well known in the art and may be manufactured from a wide variety of materials, such as porous foams, reticulated foams, apertured plastic films, natural fibers (i.e., wool or cotton fibers), synthetic fibers (i.e., polyester, polypropylene, polyethylene, etc.), or a combination of natural and synthetic fibers. For example, the topsheet can include a spunbond fiber web of polyolefin fibers or a bonded-carded web composed of natural and/or synthetic fibers. In this regard the topsheet may be composed of substantially hydrophobic material treated with a surfactant or otherwise processed to impart the desired level of wettability and liquid permeability. Exemplary topsheets are described in U.S. Patent No. 5,879,343 to Ellis et al.; U.S. Patent 5,490,846 to Ellis et al.; U.S. Patent 5,364,382 to Lattimer et al. and commonly assigned U.S. Patent Application No. 09/209,177 filed December 9, 1998 to Varona et al.; the entire contents of each of the aforesaid references are incorporated herein by reference.

Between the breathable liquid-impervious outer cover and the liquid pervious topsheet is positioned an absorbent core which typically includes one or more absorbent materials such as, for example, superabsorbent particles, wood pulp fluff, synthetic wood pulp fibers, synthetic fibers and combinations thereof. Wood pulp fluff, however, commonly lacks sufficient integrity alone and has a tendency to collapse when wet. Thus, it is often advantageous to add a stiffer reinforcing fiber such as polyolefin meltblown fibers or shorter length staple fibers, typically provided as a coform material as described, for example, in U.S. Patent 4,818,464 to Lau and U.S. Patent 4,100,324 to Anderson et al. The absorbent core may have any of a number of shapes, the size of which will vary with the desired loading capacity, the intended use of the absorbent article and other factors known to those skilled in the art. The various components of the diaper can be integrally assembled together employing various means of attachment known to those skilled in the art such as, for example, adhesive bonding, ultrasonic bonds, thermal bonds or combinations thereof.

Mocon Test Procedure For Water Vapor Transmission Rate (WVTR)

A suitable technique for determining the WVTR (water vapor transmission rate) value of a film or laminate material of the invention is the test procedure standardized by INDA (Association of the Nonwoven Fabrics Industry), number IST-70.4-99, entitled "STANDARD TEST METHOD FOR WATER VAPOR TRANSMISSION RATE THROUGH NONWOVEN AND PLASTIC FILM USING A GUARD FILM AND VAPOR PRESSURE SENSOR" which is incorporated by reference herein. The INDA procedure provides for the determination of WVTR, the permeance of the film to water vapor and, for homogeneous materials, water vapor permeability coefficient.

The INDA test method is well known and will not be set forth in detail herein. However, the test procedure is summarized as follows. A dry chamber is separated from a wet chamber of known temperature and humidity by a permanent guard film and the sample material to be tested. The purpose of the guard film is to define a definite air gap and to quiet or still the air in the air gap while the air gap is characterized. The dry chamber, guard film, and the wet chamber make up a diffusion cell in which the test film is sealed. The sample holder is known as the Permatran-W Model 100K manufactured by Mocon/Modem Controls, Inc., Minneapolis, Minnesota. A first test is made of the WVTR of the guard film and the air gap between an evaporator assembly that generates 100% relative humidity. Water vapor diffuses through the air gap and the guard film and then mixes with a dry gas flow which is proportional to water vapor concentration. The electrical signal is routed to a computer for processing. The computer calculates the transmission rate of the air gap and the guard film and stores the value for further use.

The transmission rate of the guard film and air gap is stored in the computer as CalC. The sample material is then sealed in the test cell. Again, water vapor diffuses through the air gap to the guard film and the test material and then mixes with a dry gas flow that sweeps the test material. Also, again, this mixture is carried to the vapor sensor. The computer then calculates the transmission rate of the combination of the air gap, the guard film, and the test material. This information is then used to calculate the transmission rate at which moisture is transmitted through the test material according to the equation:

$$TR^{-1}_{test\ material} = TR^{-1}_{test\ material,\ guardfilm,\ airgap} - TR^{-1}_{guardfilm,\ airgap}$$

Calculations:

WVTR: The calculation of the WVTR uses the formula:

$$WVTR = F\ S_{sat}(T)\ RH / A\ p_{sat}(T)\ (1\text{-}RH)$$

where:

$F$ = The flow of water vapor in cc/min.,
$S_{sat}(T)$ = The density of water in saturated air at temperature T,
RH = The relative humidity at specified locations in the cell,
$A$ = The cross sectional area of the cell, and,
$p_{sat}(T)$ = The saturation vapor pressure of water vapor at temperature T.

**Claims**

1. A breathable film comprising a mixture of 50% to 65% by weight filler particles and 35% to 50% by weight of a biodegradable thermoplastic polymer, wherein the film is stretch-thinned at a temperature below the melting point of the polymer such that the film comprises voids surrounded by polymer membranes formed around the filler particles, and the voids and polymer membranes create paths to facilitate passage of water vapor through the film, and wherein the biodegradable thermoplastic polymer comprises a terpolymer of butanediol, terephthalic acid, and adipic acid.

2. The breathable film of Claim 1, wherein the filler particles comprise inorganic filler particles.

3. The breathable film of Claim 2, wherein the filler particles comprise calcium carbonate.

4. The breathable film of Claim 1, wherein the filler particles comprise organic filler particles.

5. The breathable film of Claim 1, wherein the filler particles comprise water-swellable filler particles.

6. The breathable film of Claim 1, wherein the filler particles comprise biodegradable filler particles.

7. The breathable film of Claim 6, wherein the filler particles comprise a cyclodextrin.

8. The breathable film of Claim 1, wherein the film has been uniaxially stretched.

9. The breathable film of Claim 1, wherein the film has been biaxially stretched.

10. A breathable film comprising a mixture of 50% to 65% by weight filler particles and 35 % to 50 % by weight of a terpolymer of butanediol, terephthalic acid and adipic acid, wherein the film is stretch-thinned at a temperature below the melting point of the terpolymer such that the film comprises voids surrounded by polymer membranes formed around the filler particles, and the voids and polymer membranes create paths to facilitate the passage of water vapor through the film.

11. A breathable multilayer film comprising:

a primary breathable layer including a mixture of 50% to 65% by weight filler particles and 35% to 50% by weight of a biodegradable thermoplastic polymer; and
at least one skin layer;

wherein the film is stretch-thinned at a temperature below the melting point of the polymer such that the film comprises voids surrounded by polymer membranes formed around the filler particles, and the voids and polymer membranes create paths to facilitate passage of water vapor through the film, and wherein the biodegradable thermoplastic polymer comprises a terpolymer of butanediol, terephthalic acid, and adipic acid.

12. The breathable multilayer film of Claim 11, wherein the skin layer comprises a biodegradable polymer.

13. The breathable multilayer film of Claim 12, wherein the skin layer further comprises filler particles, and has voids formed around the filler particles to facilitate the passage of water vapor.

14. A breathable laminate, comprising:

a breathable film including a mixture of 50% to 65% by weight filler particles and 35% to 50% by weight of a biodegradable thermoplastic polymer comprising a terpolymer of butanediol, terephthalic acid, and adipic acid, wherein the film is stretch-thinned at a temperature below the melting point of the polymer such that the film comprises voids surrounded by polymer membranes formed around the filler particles, and the voids and polymer membranes create paths to facilitate passage of water vapor through the film; and
a fibrous nonwoven web including a biodegradable thermoplastic polymer.

15. The breathable laminate of Claim 14, wherein the film and nonwoven web are adhesively bonded together.

16. The breathable laminate of Claim 14, wherein the film and nonwoven web are thermally bonded together.

17. The breathable laminate of Claim 14, wherein the nonwoven web comprises a spunbond web.

**18.** The breathable laminate of Claim 14, wherein the nonwoven web comprises a meltblown web.

**19.** The breathable laminate of Claim 14, wherein the nonwoven web comprises an air laid web.

**20.** A personal care article comprising the breathable film of Claim 1.

**21.** A personal care article comprising the breathable film of Claim 10.

**22.** A personal care article comprising the breathable film of Claim 11.

**23.** A personal care article comprising the breathable laminate of Claim 14.

**24.** A medical article comprising the breathable film of Claim 1.

**25.** A medical article comprising the breathable film of Claim 10.

**26.** A medical article comprising the breathable film of Claim 11.

**27.** A medical article comprising the breathable laminate of Claim 14.

**Patentansprüche**

**1.** Ein atmungsaktiver Film, der eine Mischung aus 50 Gewichtsprozent bis 65 Gewichtsprozent Füllpartikel und 35 Gewichtsprozent bis 50 Gewichtsprozent eines biologisch abbaubaren thermoplastischen Polymers umfasst, wobei der Film bei einer Temperatur unterhalb des Schmelzpunkts des Polymers streckgedünnt ist, so dass der Film Hohlräume umfasst, die von Polymermembranen umgeben sind, die um die Füllpartikel ausgebildet sind, und wobei die Hohlräume und Polymermembranen Wege erzeugen, um den Durchgang von Wasserdampf durch den Film zu erleichtern, und wobei das biologisch abbaubare thermoplastische Polymer ein Terpolymer von Butandiol, Terephthalsäure und Adipinsäure umfasst.

**2.** Der atmungsaktive Film von Anspruch 1, wobei die Füllpartikel anorganische Füllpartikel umfassen.

**3.** Der atmungsaktive Film von Anspruch 2, wobei die Füllpartikel Kalziumkarbonat umfassen.

**4.** Der atmungsaktive Film von Anspruch 1, wobei die Füllpartikel organische Füllpartikel umfassen.

**5.** Der atmungsaktive Film von Anspruch 1, wobei die Füllpartikel in Wasser quellfähige Füllpartikel umfassen.

**6.** Der atmungsaktive Film von Anspruch 1, wobei die Füllpartikel biologisch abbaubare Füllpartikel umfassen.

**7.** Der atmungsaktive Film von Anspruch 6, wobei die Füllpartikel ein Cyclodextrin umfassen.

**8.** Der atmungsaktive Film von Anspruch 1, wobei der Film einachsig gestreckt worden ist.

**9.** Der atmungsaktive Film von Anspruch 1, wobei der Film zweiachsig gestreckt worden ist.

**10.** Ein atmungsaktiver Film, der eine Mischung aus 50 Gewichtsprozent bis 65 Gewichtsprozent Füllpartikel und 35 Gewichtsprozent bis 50 Gewichtsprozent eines Terpolymers von Butandiol, Terephthalsäure und Adipinsäure umfasst, wobei der Film bei einer Temperatur unterhalb des Schmelzpunkts des Terpolymers streckgedünnt ist, so dass der Film Hohlräume umfasst, die von Polymermembranen umgeben sind, die um die Füllpartikel ausgebildet sind, und wobei die Hohlräume und Polymermembranen Wege erzeugen, um den Durchgang von Wasserdampf durch den Film zu erleichtern.

**11.** Ein atmungsaktiver mehrlagiger Film, der umfasst:

eine primäre atmungsaktive Lage, die eine Mischung aus 50 Gewichtsprozent bis 65 Gewichtsprozent Füllpartikel und 35 Gewichtsprozent bis 50 Gewichtsprozent eines biologisch abbaubaren thermoplastischen Polymers umfasst, und
zumindest eine Deckschicht;

wobei der Film bei einer Temperatur unterhalb des Schmelzpunkts des Polymers streckgedünnt ist, so dass der Film Hohlräume umfasst, die von Polymermembranen umgeben sind, die um die Füllpartikel ausgebildet sind, und wobei die Hohlräume und Polymermembranen Wege erzeugen, um den Durchgang von Wasserdampf durch den Film zu erleichtern, und wobei das biologisch abbaubare thermoplastische Polymer ein Terpolymer von Butandiol, Terephthalsäure und Adipinsäure umfasst.

**12.** Der atmungsaktive mehrlagige Film von Anspruch 11, wobei die Deckschicht ein biologisch abbaubares Polymer umfasst.

**13.** Der atmungsaktive mehrlagige Film von Anspruch 12, wobei die Deckschicht des Weiteren Füllpartikel umfasst und Hohlräume aufweist, die um die Füllpartikel herum ausgebildet sind, um den Durchgang von Wasserdampf zu erleichtern.

**14.** Ein atmungsaktives Laminat, das umfasst:

einen atmungsaktiven Film, der eine Mischung aus 50 Gewichtsprozent bis 65 Gewichtsprozent Füllpartikel und 35 Gewichtsprozent bis 50 Gewichtsprozent eines biologisch abbaubaren thermoplastischen Polymers beinhaltet, welches ein Terpolymer von Butandiol, Terephthalsäure und Adipinsäure umfasst, wobei der Film bei einer Temperatur unterhalb des Schmelzpunkts des Polymers streckgedünnt ist, so dass der Film Hohlräume umfasst, die von Polymermembranen umgeben sind, die um die Füllpartikel ausgebildet sind, und wobei die Hohlräume und Polymermembranen Wege erzeugen, um den Durchgang von Wasserdampf durch den Film zu erleichtern; und
eine faserige Vliesbahn, die ein biologisch abbaubares thermoplastisches Polymer beinhaltet.

**15.** Das atmungsaktive Laminat von Anspruch 14, wobei der Film und die Vliesbahn haftend miteinander verbunden sind.

**16.** Das atmungsaktive Laminat von Anspruch 14, wobei der Film und die Vliesbahn thermisch miteinander verbunden sind.

**17.** Das atmungsaktive Laminat von Anspruch 14, wobei die Vliesbahn eine Spinnvliesbahn umfasst.

**18.** Das atmungsaktive Laminat von Anspruch 14, wobei die Vliesbahn eine Schmelzblasbahn umfasst.

**19.** Das atmungsaktive Laminat von Anspruch 14, wobei die Vliesbahn eine luftgelegte Bahn umfasst.

**20.** Ein Körperpflegeartikel, der den atmungsaktiven Film von Anspruch 1 umfasst.

**21.** Ein Körperpflegeartikel, der den atmungsaktiven Film von Anspruch 10 umfasst.

**22.** Ein Körperpflegeartikel, der den atmungsaktiven Film von Anspruch 11 umfasst.

**23.** Ein Körperpflegeartikel, der das atmungsaktive Laminat von Anspruch 14 umfasst.

**24.** Ein medizinischer Artikel, der den atmungsaktiven Film von Anspruch 1 umfasst.

**25.** Ein medizinischer Artikel, der den atmungsaktiven Film von Anspruch 10 umfasst.

**26.** Ein medizinischer Artikel, der den atmungsaktiven Film von Anspruch 11 umfasst.

**27.** Ein medizinischer Artikel, der das atmungsaktive Laminat von Anspruch 14 umfasst.

**Revendications**

**1.** Film respirant comprenant un mélange de 50 % à 65 % en poids de particules de charge et 35 % à 50 % en poids d'un polymère thermoplastique biodégradable, dans lequel le film est aminci par étirage à une température inférieure au point de fusion du polymère de sorte que le film comprend des vides entourés par des membranes de polymère formées autour des particules de charge, et les vides et les membranes de polymère créent des chemins pour faciliter le passage de vapeur d'eau à travers le film, et dans lequel le polymère thermoplastique biodégradable comprend un terpolymère de butanediol, d'acide térephtalique et d'acide adipique.

2. Film respirant selon la revendication 1, dans lequel les particules de charge comprennent des particules de charge inorganique.

3. Film respirant selon la revendication 2, dans lequel les particules de charge comprennent du carbonate de calcium.

4. Film respirant selon la revendication 1, dans lequel les particules de charge comprennent des particules de charge organique.

5. Film respirant selon la revendication 1, dans lequel les particules de charge comprennent des particules de charge gonflables dans l'eau.

6. Film respirant selon la revendication 1, dans lequel les particules de charge comprennent des particules de charge biodégradables.

7. Film respirant selon la revendication 6, dans lequel les particules de charge comprennent une cyclodextrine.

8. Film respirant selon la revendication 1, dans lequel le film a été étiré uniaxialement.

9. Film respirant selon la revendication 1, dans lequel le film a été étiré biaxialement.

10. Film respirant comprenant un mélange de 50 % à 65 % en poids de particules de charge et 35 % à 50 % en poids d'un terpolymère de butanediol, d'acide térephtalique et d'acide adipique, dans lequel le film est aminci par étirage à une température inférieure au point de fusion du terpolymère de sorte que le film comprend des vides entourés par des membranes de polymère formées autour des particules de charge, et les vides et les membranes de polymère créent des chemins pour faciliter le passage de vapeur d'eau à travers le film.

11. Film multicouche respirant comprenant :

une couche respirante primaire incluant un mélange de 50 % à 65 % en poids de particules de charge et 35 % à 50 % en poids d'un polymère thermoplastique biodégradable ; et
au moins une couche de peau ;
dans lequel le film est aminci par étirage à une température inférieure au point de fusion du polymère de sorte que le film comprend des vides entourés par des membranes de polymère formées autour des particules de charge, et les vides et les membranes de polymère créent des chemins pour faciliter le passage de vapeur d'eau à travers le film, et dans lequel le polymère thermoplastique biodégradable comprend un terpolymère de butanediol, d'acide térephtalique et d'acide adipique.

12. Film multicouche respirant selon la revendication 11, dans lequel la couche de peau comprend un polymère biodégradable.

13. Film multicouche respirant selon la revendication 12, dans lequel la couche de peau comprend en outre des particules de charge, et a des vides formés autour des particules de charge pour faciliter le passage de vapeur d'eau.

14. Laminé respirant, comprenant :

un film respirant incluant un mélange de 50 % à 65 % en poids de particules de charge et 35 % à 50 % en poids d'un polymère thermoplastique biodégradable comprenant un terpolymère de butanediol, d'acide térephtalique et d'acide adipique, dans lequel le film est aminci par étirage à une température inférieure au point de fusion du polymère de sorte que le film comprend des vides entourés par des membranes de polymère formées autour des particules de charge, et les vides et les membranes de polymère créent des chemins pour faciliter le passage de vapeur d'eau à travers le film ; et
un voile non-tissé fibreux incluant un polymère thermoplastique biodégradable.

**15.** Laminé respirant selon la revendication 14, dans lequel le film et le voile non-tissé sont fixés ensemble de manière adhésive.

**16.** Laminé respirant selon la revendication 14, dans lequel le film et le voile non-tissé sont fixés ensemble de manière thermique.

**17.** Laminé respirant selon la revendication 14, dans lequel le voile non-tissé comprend un voile filé-lié.

**18.** Laminé respirant selon la revendication 14, dans lequel le voile non-tissé comprend un voile extrudé-soufflé.

**19.** Laminé respirant selon la revendication 14, dans lequel le voile non-tissé comprend un voile appliqué avec de l'air.

**20.** Article de soin personnel comprenant le film respirant de la revendication 1.

**21.** Article de soin personnel comprenant le film respirant de la revendication 10.

**22.** Article de soin personnel comprenant le film respirant de la revendication 11.

**23.** Article de soin personnel comprenant le laminé respirant de la revendication 14.

**24.** Article médical comprenant le film respirant de la revendication 1.

**25.** Article médical comprenant le film respirant de la revendication 10.

**26.** Article médical comprenant le film respirant de la revendication 11.

**27.** Article médical comprenant le laminé respirant de la revendication 14.

FIG. 1

FIG. 2

FIG. 3

FIG. 4

REFERENCES CITED IN THE DESCRIPTION

**Patent documents cited in the description**

- EP 1008629 A1
- EP 0776927 A1
- US 6028160 A
- US 4340563 A, Appel
- US 3692618 A
- US 3802817 A
- US 3339992 A
- US 3341394 A
- US 3502763 A
- US 3502638 A
- US 3542615 A
- US 3648241 A
- US 4798603 A
- US 4753649 A
- US 4704116 A
- US 5429629 A
- US 5879343 A
- US 5490846 A
- US 5364382 A
- US 20917798 A
- US 4818464 A
- US 4100324 A